# EUROPÄISCHE PATENTSCHRIFT

(11) **EP 2 362 125 B1**
(45) Veröffentlichungstag und Bekanntmachung des Hinweises auf die Patenterteilung: **20.04.2016**
(21) Anmeldenummer: 11151285.1
(22) Anmeldetag: 18.01.2011
(51) Int. Cl.: F16K 31/06, H01F 7/08

(54) **Betätigungselement einer elektromagnetischen Stelleinheit eines Hydraulikventils**
Actuating components of an electromagnetic positioning unit of a hydraulic valve
Elément d'actionnement d'une unité de réglage électromagnétique d'une soupape hydraulique

(30) Priorität: 22.02.2010 DE 102010008773
(43) Veröffentlichungstag der Anmeldung: 31.08.2011
(73) Patentinhaber: Schaeffler Technologies AG & Co. KG, 91074 Herzogenaurach (DE)
(72) Erfinder: Hoppe, Jens, 91056 Erlangen (DE); Konias, Stefan, 91054 Erlangen (DE); Wang, Yi, 91058 Erlangen (DE)

(56) Entgegenhaltungen:
- EP-A2- 0 924 395
- WO-A1-01/00473
- WO-A1-2005/043017
- DE-A1- 4 221 822
- DE-A1- 19 712 590
- DE-A1-102005 046 065
- DE-A1-102005 058 846
- DE-A1-102008 014 238
- DE-B3-102005 050 887
- DE-B3-102007 058 620

## Beschreibung

### Gebiet der Erfindung

Die Erfindung betrifft ein Betätigungselement einer elektromagnetischen Stelleinheit eines Hydraulikventils, mit einem im Wesentlichen zylindrisch ausgebildeten Anker, der in der Stelleinheit verschiebbar angeordnet ist und ein Verfahren zur Herstellung eines Betätigungselements einer elektromagnetischen Stelleinheit eines Hydraulikventils, wobei das Betätigungselement zumindest einen im Wesentlichen zylindrischen Anker, eine Stößelstange und einen Magnetkonus aufweist, wobei die Stößelstange und der Magnetkonus einteilig mit dem Anker ausgebildet sind,

Derartige Wegeventile werden in Brennkraftmaschinen beispielsweise zur Ansteuerung von hydraulischen Nockenwellenverstellern oder schaltbaren Nockenfolgern eingesetzt. Die Wegeventile bestehen aus einer elektromagnetischen Stelleinheit und einem Hydraulikabschnitt. An dem Hydraulikabschnitt sind zumindest ein Zulaufanschluss, mindestens ein Arbeitsanschluss und ein Tankanschluss ausgebildet. Mittels der elektromagnetischen Stelleinheit können gezielt bestimmte Anschlüsse des Hydraulikabschnitts verbunden und somit die Druckmittelströrne gelenkt werden,

Für den Einsatz eines Wegeventils zur Steuerung eines Nockenwellenverstellers ist das Hydraulikventil im Normalfall als 4/3-Proportionalwegeventil ausgebildet. Ein derartiges Proportionalventil ist beispielsweise in der DE 100 51 614 A1 offenbart. In dieser Ausführungsform ist die elektromagentisehe Stelleinheit fest mit dem Ventilabschnitt verbunden. Die elektromagnetische Stelleinheit weist ein erstes Magnetjoch, eine Spule, ein zweites Magnetjoch, ein Betätigungselement und ein Anschlusselement auf, welches elektrische Kontakte aufnimmt, die zur Stromversorgung der Spule dient. Das Betätigungselement besteht aus einem Anker und einer kraftschlüssig mit dem Anker verbundenen Stößelstange.

Der Hydraulikabschnitt besteht aus einem Ventilgehäuse und einem darin axial verschiebbar angeordneten Steuerkolben. Das Ventilgehäuse ist innerhalb einer Aufnahmeöffnung des ersten Magnetjoch angeordnet und ortsfest mit diesem verbunden. An der Außenmantelfläche des Ventilgehäuses sind mehrer Nuten ausgebildet, die in das Innere des Ventilgehäuses münden und als Druckmittelanschlüsse dienen. Im Inneren des Ventilgehäuses ist ein Steuerkolben axial verschiebbar angeordnet, wobei der Außendurchmesser des Steuerkolbens dem Innendurchmesser des Ventilgehäuses angepasst ist. Des Weiteren sind am Steuerkolben Ringnuten ausgebildet, über welche benachbarte Druckmittelanschlüsse verbunden werden können.

Die Spule, das erste und das zweite Magnetjoch sind koaxial zueinander angeordnet. Das erste und das zweite Magnetjoch sind dabei in axialer Richtung zueinander versetzt. In dem Bereich des ersten und zweiten Magnetjochs befindet sich radial innerhalb der Magnetjoche eine topfförmige Ankerführungshülse, in der der Anker axial verschiebbar aufgenommen ist. Die zylindrische Innenmantelfläche der Ankerführungshülse dient zur Führung des Ankers; deren Boden begrenzt die Verschiebung des Ankers in eine axiale Richtung.

Zwischen dem Boden der Ankerführungshülse und dem bündig an deren Innenmantelfläche anliegenden Anker, ist ein abgeschlossener Raum ausgebildet. Dieser Raum kann zum einen, durch einen in diesem auftretenden Unterdruck, hemmend auf eine Bewegung des Ankers vom Boden weg wirken. Des Weiteren kann in diesen Raum eintretendes Leckageöl eine axiale Bewegung des Ankers auf den Boden zu hemmen. Um diesem unerwünschten Effekt entgegenzuwirken, ist der Anker mit axialen Bohrungen oder axial verlaufenden Nuten an dessen Mantelfläche versehen um den Druckausgleich zwischen den Räumen vor und hinter dem Anker zu ermöglichen.

Der Anker, das erste und das zweite Magnetjoch bilden einen Flusspfad für ein Magnetfeld, das durch Bestromen der Spule hervorgerufen wird. Durch Bestromen der Spule wird der Anker in Richtung des zweiten Magnetjoch gedrängt, wobei diese Bewegung mittels der am Anker angebrachten Stöf3elstange auf den Steuerkolben übertragen wird. Dieser wird nun gegen eine sich am Ventilgehäuse abstützende Feder in axialer Richtung bewegt. Die Stößelstange ist fest mit dem Anker verbunden. Somit bilden der Anker und die Stößelstange ein Betätigungselement aus, welches durch Bestromen der Spule in axialer Richtung verschoben werden kann und den Steuerkolben des Hydraulikabschnitts betätigt, d.h. innerhalb des Ventilgehäuses des Hydraulikabschnitts positioniert,

Ein weiteres Wegeventil ist in der DE 10 2006 031 517 A1 offenbart. In dieser Ausführungsform ist der hiydraulikabschnitt separat zu der elektromagnetischen Stelleinheit ausgeführt und in einem Hohlraum einer Nockenwelle aufgenommen, so dass der Hydraulikabschnitt während des Betriebs der Brennkraftmaschine mit der Nockenwelle rotiert. Die Stelleinheit ist ortsfest an einem Zylinderkopfdeckel oder Zylinderkopf befestigt. Die Positionierung erfolgt wiederrum durch ein Betätigungselement, welches einen Anker und eine mit diesem verbundene Stößelstange umfasst. Dabei wird die Stellbewegung des Ankers mittels der Stößelstange, die in eine Aufnahme des Ankers eingepresst ist, auf den Steuerkolben des Ventilabschnitts übertragen.

Ein weiteres Wegeventil ist in der DE 10 2005 050 887 B3 offenbart. Gezeigt ist ein Elektromagnet mit einem einen Ankerraum begrenzenden Polkern und einem im Ankerraum beweglich gelagerten Magnetanker. Der Elektromagnet west darüber hinaus einen Ankerstößel auf, der der Betätigung eines Vetilgliedes dient. Der Anker wird durch Sintern hergestellt.

### Zusammenfassung der Erfindung

Der Erfindung liegt daher die Aufgabe zugrunde ein Betätigungselement einer elektromagnetischen Stelleinheit eines Wegeventils zu schaffen, wobei dessen Herstellungsaufwand minimiert und dessen Herstellungskosten verringert werden sollen.

Erfindungsgemäß wird die Aufgabe dadurch gelöst, dass zur Ausbildung des Ankers ein Fließpressverfahren Einsatz findet, mittels dem dessen Mantelfläche und eine Grundfläche werkzeugfallend ausgeformt sind. Die Mantelfläche des Ankers weist eine Nut auf, über die zwei in axialer Richtung von dem Anker getrennte Räume miteinander kommunizieren. Somit kann während der axialen Bewegung des Ankers ein Druckausgleich zwischen den Räumen stattfinden, so dass die Hysterese der elektromechanischen Stelleinheit minimiert wird. Der Verlauf der Nut weist eine axiale Komponente und eine Komponente in Umfangsrichtung des Ankers auf. Die Nut kann beispielsweise spiralförmig an der Mantelfläche des Ankers verlaufen. Dadurch werden die Lagerung des Ankers verbessert und magnetische Querkräfte verringert. Die Nut wird mittels des Fließpressverfahrens werkzeugfallend an dem Anker ausgeformt.

Elektromagnetische Hydraulikventile dienen zur Steuerung eines Druckmittelzuflusses zu bzw. eines Druckmittelabflusses von einem hydraulischen Verbraucher und umfassen eine elektromagnetische Stelleinheit und einen Hydraulikabschnitt. Die elektromagnetische Stelleinheit umfasst ein Betätigungselement, das zumindest einen Anker aufweist, der unter dem Einfluss eines veränderbaren Magnetfeldes innerhalb der Stelleinheit positioniert werden kann. Sie Stellbewegung wird beispielsweise mittels einer Stößelstange auf einen Steuerkolben des Hydraulikabschnitts übertragen und so die Druckmittelströme durch diesen gesteuert.

Der Anker weist beispielsweise eine kreiszylindrische Mantelfläche auf, die in axialer Richtung von einer kreisförmigen Grundfläche und einer kreisförmigen Deckfläche begrenzt ist. Ebenso denkbar sind jedoch andere Formen der Grund- und Deckfläche, beispielsweise Ellipsen oder andere Ankergeometrien. Der Anker ist mittels eines Fließpressverfahrens hergestellt, wobei zumindest die Mantelfläche und die Grundfläche werkzeugfallend ausgeformt sind. So werden mittels des Fließpressverfahrens die sehr genau herzustellenden Außenkonturen hergestellt, ohne dass an diesen Flächen spanende Nachbearbeitungsschritte notwendig sind, Bei diesem Verfahren wird ein Rohling, beispielsweise ein Stück Draht, mittels eines Stempels mit einer Kraft beaufschlagt, so dass das Material unterhalb seiner Schmelztemperatur zu fließen beginnt und eine Form ausfüllt, die als Negativ zu der gewünschten Form des Ankers ausgebildet ist. An das Fließpressverfahren können sich spanende Nachbearbeitungsschritte anschließen, beispielsweise um eine Stößelstange oder andere zusätzliche Funktionen auszubilden.

Die Anwendung eines Fließpressverfahrens zur Herstellung des Ankers stellt eine kostengünstige Alternative zu den üblicherweise spanend hergestellten Ankern dar. Zum Einen wird Material eingespart, zum Anderen erfolgt die Herstellung auf diese Weise mit deutlich höherer Taktfrequenz. Gleichzeitig können zusätzliche Strukturen an dem Anker durch einfaches Anpassen der Form hergestellt werden, so dass diese während des Formgebungsprozesses ausgebildet werden. Darüber hinaus können durch dieses Herstellungsverfahren hohe Oberflächengüten erreicht und somit Nachbearbeitungsschritte eingespart werden. So kann beispielsweise die Mantelfläche des Ankers, die als Lagerfläche des Ankers dient, mit der benötigten Oberflächengüte hergestellt werden.

In einer Weiterbildung der Erfindung wird vorgeschlagen, dass eine Grundfläche des Ankers eine Ausbuchtung aufweist, die mittels des Fließpressverfahrens werkzeugfallend an dem Anker ausgeformt ist. Die Ausbuchtung liegt bei maximal ausgelenktem Anker an einer axialen Begrenzungsfläche des Ankerraums an und verhindert, dass der Anker flächig an der Begrenzung anliegt. Somit werden die in dieser Stellung wirkenden Adhäsionskräfte verringert.

In einer vorteilhaften Weiterbildung der Erfindung ist vorgesehen, dass an einer Deckfläche des Ankers ein Magnetkonus ausgebildet ist, dessen Außenmantelfläche mittels des Fließpressverfahrens werkzeugfallend ausgeformt ist. Mittels des Magnetkonus kann die Kraft-Weg-Kennlinnie der elektromagnetischen Stelleinheit in einem breiten Wegintervall konstant gestaltet werden. Die dazu benötigte Oberflächengüte der Außenmantelfläche des Konus kann mittels des Fließpressverfahrens erreicht werden, so dass wiederum keine Nachbearbeitungsschritte notwendig sind. Um eine kompaktere Bauweise zu erreichen, kann vorgesehen sein, dass der Magnetkonus ringförmig ausgebildet ist, d.h. radial innerhalb der konischen Außenmantelfläche ein zylindrischer Hohlraum ausgebildet ist. Bewegt sich der Anker auf ein Magnetjoch zu, so kann der Hohlraum einen Bereich des Magnetjochs aufnehmen.

Darüber hinaus kann vorgesehen sein, dass das Betätigungselement eine Stößelstange aufweist, die einteilig mit dem Anker ausgebildet ist und sich ausgehend von einer Deckfläche des Ankers in axialer Richtung erstreckt.

Erfindungsgemäß wird die Aufgabe durch ein Verfahren zur Herstellung eines Betätigungselements einer elektromagnetischen Stelleinheit eines Hydraulikventils, wobei das Betätigungselement zumindest einen im Wesentlichen zylindrischen Anker, eine Stößelstange und einen Magnetkonus aufweist, wobei die Stößelstange und der Magnetkonus einteilig mit dem Anker ausgebildet sind, mit folgenden Verfahrenschritten gelöst:
- Herstellung eines Rohlings mittels eines Fließpressverfahrens, wobei eine Mantelfläche des Ankers eine Nut aufweist, über die zwei in axialer Richtung von dem Anker getrennte Räume miteinander kommunizieren können, wobei der Verlauf der Nut eine axiale Komponente und eine Komponente in Umfangsrichtung des Ankers aufweist, und die Mantelfläche und eine Außenmantelfläche des Magnetkonus werkzeugfallend ausgebildet sind und der Rohling einen sich an ein axiales Ende des Magnetkonus anschließenden Materialbereich aufweist,
- Ausbilden der Stößelstange durch spanende Bearbeitung des Materialbereichs und
- Ausbilden eines Hohlraums radial innerhalb des Magnetkonus durch ein spanendes Verfahren.
Somit ist die Anzahl der Einzelteile des Betätigungselements auf ein Minimum reduziert, wobei zusätzlich der Zerspanungsaufwand auf ein Minimum reduziert ist.

### Kurze Beschreibung der Zeichnungen

Weitere Merkmale der Erfindung ergeben sich aus der nachfolgenden Beschreibung und aus den Zeichnungen, in denen Ausführungsbeispiele der Erfindung vereinfacht dargestellt sind. Es zeigen:
- Figur 1: eine elektromagnetische Stelleinheit eines Hydraulikventils mit einem erfindungsgemäßen Betätigungselement im Längsschnitt,
- Figur 2: eine perspektivische Ansicht des Betätigungselements aus Figur 1,
- Figur 3: einen Längsschnitt durch das Betätigungselement aus Figur 2.

### Ausführliche Beschreibung der Zeichnung

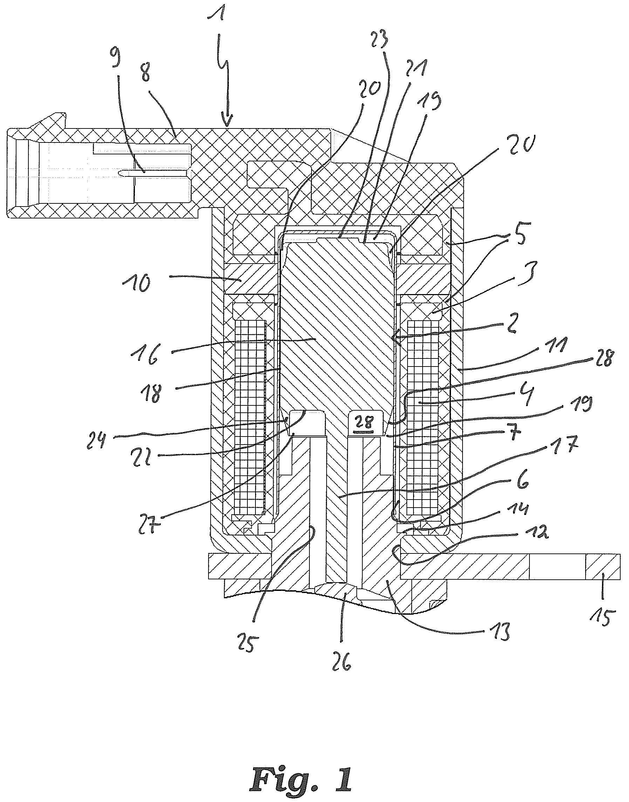

Figur 1 zeigt eine elektromagnetische Stelleinheit 1 eines Hydraulikventils mit einem erfindungsgemäßen Betätigungselement 2 im Längsschnitt. Die elektromagnetische Stelleinheit 1 weist einen Spulenkörper 3 aus einem nicht magnetisierbaren Material auf, der eine aus mehreren Windungen eines geeigneten Drahtes bestehende Spule 4 trägt. Die Spule 4 und der Spulenkörper 3 sind in einem zylindrischen Abschnitt eines Trägers 5 aufgenommen. Der Träger 5 besteht aus einem nicht magnetisierbaren Material und weist an einer Grundfläche des zylindrischen Abschnittes eine sacklochartige Aufnahme 6 auf, in der eine topfförmige Ankerführungshülse 7 angeordnet ist. Im Bereich des Bodens der Ankerführungshülse 7 weist der Träger 5 ein Anschlusselement 8 mit elektrischen Kontakten 9 und ein erstes Magnetjoch 10 auf, welches sich ausgehend von der Ankerführungshülse 7 in radialer Richtung nach außen erstreckt. Der zylindrische Abschnitt des Trägers 5 ist innerhalb eines topfförmigen Gehäuses 11 angeordnet, dessen Boden eine zentrale Durchgangsöffnung 12 aufweist, die mit der Aufnahme 6 fluchtend ausgebildet ist. In die Durchgangsöffnung 12 greift ein zweites Magnetjoch 13 ein, das sich in die Ankerführungshülse 7 hinein erstreckt. Das zweite Magnetjoch 13 ist mittels einer Bördelverbindung 14 mit dem Gehäuse 11 verbunden, wobei zwischen dem Boden des Gehäuses 11 und einem Absatz des zweiten Magnetjochs 13 ein Befestigungsflansch 15 angeordnet ist.

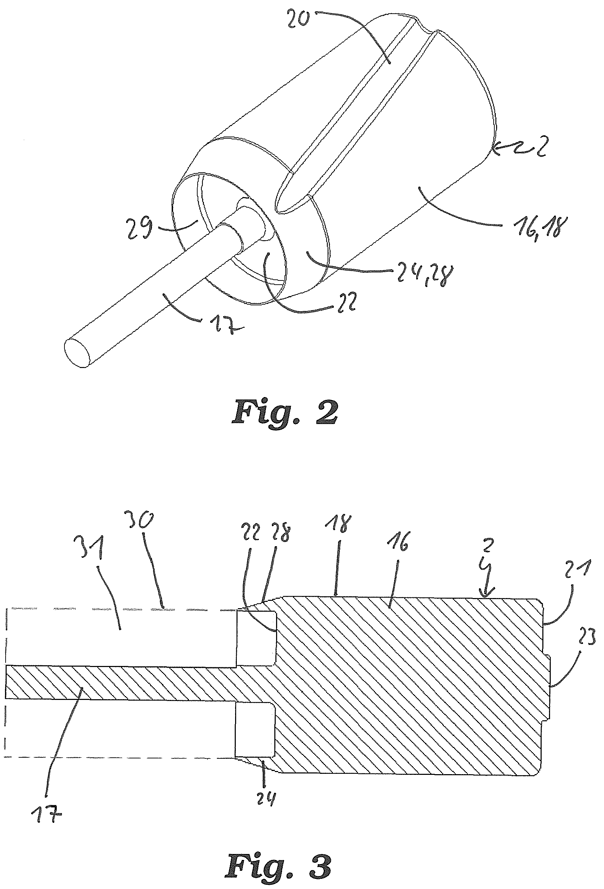

In der Ankerführungshülse 7 ist das Betätigungselement 2 axial verschiebbar angeordnet. Das Betätigungselement 2 umfasst einen Anker 16 und eine Stößelstange 17. Der Anker 16 ist im Wesentlichen zylindrisch ausgeführt, wobei eine äußere Mantelfläche 18 des Ankers 16 der Ankerführungshülse 7 angepasst ist. Somit trennt der Anker 16 den von der Ankerführungshülse 7 begrenzten Bereich in zwei axial zueinander beabstandete Räume 19. An der Mantelfläche 18 des Ankers 16 sind Nuten 20 ausgebildet (Figur 2), die von einer Grundfläche 21 zu einer Deckfläche 22 des zylindrischen Ankers 16 verlaufen, so dass die Räume 19 über die Nuten 20 miteinander kommunizieren. Die Nuten 20 verlaufen nicht strikt in axialer Richtung, sondern sind zur Achse des Ankers 16 angestellt, so dass diese spiralförmig an der Mantelfläche 18 verlaufen. Dadurch wird die Lagerung des Ankers 16 in der Ankerführungshülse 7 verbessert und magnetische Querkräfte auf den Anker 16 reduziert.

An der Grundfläche 21 des Ankers 16 ist eine Ausbuchtung 23 vorgesehen (Figur 3), die als Anschlag an dem Boden der Ankerführungshülse 7 dient. Somit wird die Adhäsionskraft verringert, die bei Anlage des Ankers 16 an dem Boden der Ankerführungsholse 7 auf diesen wirkt.

An der Deckfläche 22 ist ein ringförmiger Magnetkonus 24 ausgebildet, der sich in axialer Richtung erstreckt. Dabei verringert sich der Außendurchmesser des Magnetkonus 24 mit zunehmendem Abstand von der Deckfläche 22 des Ankers 16. Radial innerhalb des Magnetkonus 24 ist ein zylindrischer Totraum 29 ausgebildet.

Die Stößelstange 17 ist einteilig mit dem Anker 16 ausgebildet und erstreckt sich ausgehend von der Deckfläche 22 durch den Hohlraum 29 in axialer Richtung. Die Stößelstange 17 durchgreift eine Öffnung 25 des zweiten Magnetjochs 13, wobei ein axiales Ende der Stößelstange 17 an einem nur teilweise dargestellten Steuerkolben 26 eines Hydraulikabschnitts des Hydraulikventils anliegt.

Während des Betriebs des Hydraulikventils wird die Bestromung der Spule 4 geregelt, wodurch ein Magnetfeld innerhalb der Stelleinheit 1 generiert wird. Das erste Magnetjoch 10, das Gehäuse 11, das zweite Magnetjoch 13 und der Anker 16, die aus magnetisierbaren Materialien bestehen, dienen dabei als Flusspfad, der durch einen Luftspalt 27 zwischen dem Anker 16 und dem zweiten Magnetjoch 13 komplettiert wird. Bei Bestromung der Spule 4 wirkt auf den Anker 16 eine Kraft in Richtung des zweiten Magnetjoch 13, die abhängig von der Höhe der Bestromung der Spule 4 ist. Durch Ausbalancieren der magnetischen Kraft, die auf den Anker 16 wirkt, und einer Federkraft, die auf den Steuerkolben 26 wirkt, kann der Anker 16 und damit der Steuerkolben 26 in jeder beliebigen Stellung zwischen zwei Extremstellungen positioniert werden. Dabei kann das zweite Magnetjoch 13 in den Hohlraum 29 eintauchen.

Über die Nuten 20 sind die zwei Räume 19 verbunden, die in axialer Richtung des Ankers 16 angeordnet sind und von diesem getrennt werden. Während der Bewegung des Ankers 16 kann über die Nuten 20 ein Druckausgleich zwischen den Räumen 19 stattfinden und in der Stelleinheit 1 vorhandenes Schmiermittel ausgetauscht werden. Somit wird die Hysterese der Strom-Weg Kennlinie der Stelleinheit 1 reduziert.

Der Anker 16 ist mittels eines Fließpressverfahrens hergestellt. Dazu wird ein Rohling, beispielsweise ein Stück Draht, eines geeigneten Material mittels eines Stempels mit Druck beaufschlagt, so dass das Material unterhalb dessen Schmelztemperatur zu fließen beginnt und eine Form, die ein negativ der gewünschten Form des Ankers 16 darstellt, ausfüllt. Vorteil dieser Methode ist die durch dieses Verfahren erreichbare Oberflächengüte, wodurch aufwändige und kostenintensive Nachbehandlungsschritte nicht nötig sind. Somit können die Flächen, die mit hoher Genauigkeit gefertigt werden müssen, während des Fließpressverfahrens werkzeugfallend gefertigt werden, ohne dass spanende Nachbearbeitungsschritte notwendig sind. Derartige Flächen sind beispielsweise die Mantelfläche 18 des Ankers 16, die als Lagerstelle des Ankers 16 dient, oder die Außenmantelfläche 28 des Magnetkonus 24, deren Kontur maßgeblich den Verlauf des magnetischen Flusses und damit die Kraft-Weg-Kennlinie der Stelleinheit 1 beeinflusst.

Des Weiteren können zusätzliche Strukturen, beispielsweise die Nuten 20 oder die Ausbuchtung 23 kostengünstig während des Fließpressverfahrens realisiert werden.

Während der Herstellung des Betätigungselements 2 wird zunächst in dem Fließpressverfahren ein Rohling 30 (gestrichelt dargestellt) hergestellt, der die Außenkonturen des Ankers 16 und des Magnetkonus 24, inklusive der Nuten 20 und der Ausbuchtung 23, in der benötigten Güte aufweist. In dem Bereich der Stößelstange 17 weist der Rohling 30 einen Materialbereich 31 (gestrichelt dargestellt) auf, der ausgehend von dem Ende des Magnetkonus 24 sich in axialer Richtung erstreckt und im Vergleich zu der zu fertigenden Stößelstange 17 einen Materialüberschuss aufweist. In einem anschließenden, z.B. spanenden Arbeitsschritt wird die Stößelstange 17 und der Hohlraum 29 radial innerhalb des Magnetkonus 24 ausgebildet.

### Bezugszeichen

- 1: Stelleinheit
- 2: Betätigungselement
- 3: Spulenkörper
- 4: Spule
- 5: Träger
- 6: Aufnahme
- 7: Ankerführungshülse
- 8: Anschlusselement
- 9: Kontakt
- 10: erstes Magnetjoch
- 11: Gehäuse
- 12: Durchgangsöffnung
- 13: zweites Magnetjoch
- 14: Bördelverbindung
- 15: Befestigungsflansch
- 16: Anker
- 17: Stößelstange
- 18: Mantelfläche
- 19: Raum
- 20: Nut
- 21: Grundfläche
- 22: Deckfläche
- 23: Ausbuchtung
- 24: Magnetkonus
- 25: Öffnung
- 26: Steuerkolben
- 27: Luftspalt
- 28: Außenmantelfläche
- 29: Hohlraum
- 30: Rohling
- 31: Materialbereich

## Patentansprüche

1. Betätigungselement (2) einer elektromagnetischen Stelleinheit (1) eines Hydraulikventils mit einem im Wesentlichen zylindrisch ausgebildeten Anker (16), der in der Stelleinheit (1) verschiebbar angeordnet ist, **dadurch gekennzeichnet, dass** die Mantelfläche (18) des Ankers (13) eine Nut (20) aufweist, über die zwei in axialer Richtung von dem Anker (13) getrennte Räume (19) miteinander kommunizieren, wobei der Verlauf der Nut (20) eine axiale Komponente und eine Komponente in Umfangsrichtung des Ankers (16) aufweist, und dass zur Ausbildung des Ankers (16) ein Fließpressverfahren Einsatz findet, mittels dem dessen Mantelfläche (18) und eine Grundfläche (21) werkzeugfallend ausgeformt sind, wobei die Nut (20) mittels des Fließpressverfahrens werkzeugfallend an dem Anker (13) ausgeformt ist..

2. Betätigungselement (2) nach Anspruch 1, **dadurch gekennzeichnet, dass** eine Grundfläche (21) des Ankers (13) eine Ausbuchtung (23) aufweist, die mittels des Fließpressverfahrens werkzeugfallend an dem Anker (13) ausgeformt ist.

3. Betätigungselement (2) nach Anspruch 1, **dadurch gekennzeichnet, dass** an einer Deckfläche (22) des Ankers (16) ein Magnetkonus (24) ausgebildet ist, dessen Außenmantelfläche (28) mittels des Fließpressverfahrens werkzeugfallend ausgeformt ist.

4. Betätigungselement (2) nach Anspruch 1, **dadurch gekennzeichnet, dass** der Magnetkonus (24) ringförmig ausgebildet ist.

5. Betätigungselement (2) nach Anspruch 1, **dadurch gekennzeichnet, dass** das Betätigungselement (2) eine Stößelstange (17) aufweist, die einteilig mit dem Anker (17) ausgebildet ist und sich ausgehend von einer Deckfläche (22) des Ankers (16) in axialer Richtung erstreckt.

6. Verfahren zur Herstellung eines Betätigungselements (2) einer elektromagnetischen Stelleinheit (1) eines Hydraulikventils, wobei das Betätigungselement (2) zumindest einen im Wesentlichen zylindrischen Anker (16), eine Stößelstange (17) und einen Magnetkonus (24) aufweist, wobei die Stößelstange (17) und der Magnetkonus (24) einteilig mit dem Anker (16) ausgebildet sind, **gekennzeichnet durch folgende Verfahrensschritte,**
- Herstellung eines Rohlings (30) mittels eines Fließpressverfahrens, wobei eine Mantelfläche (18) des Ankers (16) eine Nut (20) aufweist, über die zwei in axialer Richtung von dem Anker getrennte Räume (19) miteinander kommunizieren können, wobei der Verlauf der Nut eine axiale Komponente und eine Komponente in Umfangsrichtung des Ankers aufweist, und die Mantelfläche und eine Außenmantelfläche (28) des Magnetkonus (24) werkzeugfallend ausgebildet sind und der Rohling (30) einen sich an ein axiales Ende des Magnetkonus (24) anschließenden Materialbereich (31) aufweist,
- Ausbilden der Stößelstange (17) **durch** spanende Bearbeitung des Materialbereichs (31) und
- Ausbilden eines Hohlraums (28) radial innerhalb des Magnetkonus (24) **durch** ein spanendes Verfahren.

## Claims

1. Activation element (2) of an electromagnetic actuating unit (1) of a hydraulic valve having an armature (16) which is of essentially cylindrical design and which is arranged in a slidable fashion in the actuating unit (1), **characterized in that**, the lateral surface (18) of the armature (13) has a groove (2.0) via which two spaces (19) which are separated from the armature (13) in the axial direction communicate with one another wherein the profile of the groove (20) has an axial component and a component in the circumferential direction of the armature (16), and **in that** for forming the armature (16) an extrusion method is used by means of which the lateral surface (18) and a base surface (21) of said armature (16) are formed in an off-tool fashion, wherein the groove (20) is formed on the armature (13) by means of the extrusion method in an off-tool fashion.

2. Activation element (2) according to Claim 1, **characterized in that** a base surface (21) of the armature (13) has a bulge (23) which is formed on the armature (13) by means of the extrusion in an off-tool fashion.

3. Activation element (2) according to Claim 1, **characterized in that** a magnet cone (24) is constructed on a covering surface (22) of the armature (16), the outer lateral surface (28) of which magnet cone (24) is formed by means of the extrusion process in an off-tool fashion.

4. Activation element (2) according to Claim 1, **characterized in that** the magnet cone (24) is of annular design.

5. Activation element (2) according to Claim 1, **characterized in that** the activation element (2) has a plunger rod (17) which is embodied in one piece with the armature (17) and extends in the axial direction starting from a covering surface (22) of the armature (16).

6. Method for manufacturing an activation element (2) of an electromagnetic actuating unit (1) of a hydraulic valve, wherein the activation element (2) has at least one substantially cylindrical armature (16), one plunger rod (17) and one magnet cone (24), wherein the plunger rod (17) and the magnet cone (24) are embodied in one piece with the armature (16), **characterized by the following method steps:**
- manufacture of a blank (30) by means of an extrusion method, wherein a lateral surface (18) of the armature (16) has a groove (20) via which two spaces (19) which are separated from the armature in the axial direction can communicate with one another, wherein the profile of the groove has an axial component and a component in the circumferential direction of the armature, and the lateral surface and an outer lateral surface (28) of the magnet cone (24) are embodied in an off-tool fashion and the blank (30) has a material region (31) adjoining an axial end of the magnet cone (24),
- construction of the plunger rod (17) by materialremoving processing of the material region (31), and
- construction of a cavity (28) radially within the magnet cone (24) by means of a material-removing method.

## Revendications

1. Élément d'actionnement (2) d'une unité de réglage électromagnétique (1) d'une soupape hydraulique avec une ancre (16) réalisée pour l'essentiel de façon cylindrique et disposée de façon à pouvoir être coulissée dans l'unité de réglage (1), **caractérisé en ce que** la surface d'enveloppe (18) de l'ancre (13) comporte une rainure (20) via laquelle deux chambres (19) séparées dans la direction axiale de l'ancre (13) communiquent entre elles, la trajectoire de la rainure (20) comportant une composante axiale et une composante dans la direction périphérique de l'ancre (16) et que pour former l'ancre (16), un procédé d'extrusion est utilisé à l'aide duquel la surface d'enveloppe (18) de l'angle et une surface de base (21) sont formés en tombant de l'outil, la rainure (20) étant formée à l'aide du procédé d'extrusion en tombant de l'outil au niveau de l'ancre (13).

2. Élément d'actionnement (2) selon la revendication 1, **caractérisé en ce qu'**une surface de base (21) de l'ancre (13) comporte un bombement (23) formé à l'aide du procédé d'extrusion en tombant de l'outil au niveau de l'ancre (13).

3. Élément d'actionnement (2) selon la revendication 1, **caractérisé en ce qu'**un cône magnétique (24) est réalisé au niveau d'une surface de couverture (22) de l'ancre (16), la surface d'enveloppe extérieure (28) dudit cône étant formée en tombant de l'outil au moyen du procédé d'extrusion.

4. Élément d'actionnement (2) selon la revendication 1, **caractérisé en ce que** le cône magnétique (24) est réalisé en forme d'anneau.

5. Élément d'actionnement (2) selon la revendication 1, **caractérisé en ce que** l'élément d'actionnement (2) comporte une tige-poussoir (17) réalisée d'un seul tenant avec l'ancre (17) et s'étendant dans la direction axiale à partir d'une surface de couverture (22) de l'ancre (16).

6. Procédé de fabrication d'un élément d'actionnement (2) d'une unité de réglage électromagnétique (1) d'une soupape hydraulique, l'élément d'actionnement (2) comportant au moins une ancre (16) pour l'essentiel cylindrique, une tige-poussoir (17) et un cône magnétique (24), la tige-poussoir (17) et le cône magnétique (24) étant réalisés d'un seul tenant avec l'ancre (16), **caractérisé par** les étapes suivantes :
- fabrication d'une ébauche (30) à l'aide d'un procédé d'extrusion, une surface d'enveloppe (18) de l'ancre (16) comportant une rainure (20) via laquelle deux chambres (19) séparées de l'ancre dans la direction axiale peuvent communiquer entre elles, la trajectoire de la rainure comportant une composante axiale et une composante dans la direction périphérique de l'ancre et la surface d'enveloppe et une surface d'enveloppe extérieure (28) du cône magnétique (24) étant réalisées en tombant de l'outil et l'ébauche (30) comportant une zone de matériau (31) rattachée à une extrémité axiale du cône magnétique (24) ;
- formation de la tige-poussoir (17) par traitement par enlèvement de copeaux de la zone de matériau (31) ; et
- formation d'un espace creux (28) dans le plan radial à l'intérieur du cône magnétique (24) par le biais d'un procédé par enlèvement de copeaux.
